# EUROPEAN PATENT APPLICATION

(11) **EP 2 420 758 A1**
(43) Date of publication of application: **22.02.2012**
(21) Application number: 10764502.0
(22) Date of filing: 15.04.2010
(51) Int. Cl.: F25B 1/00, F24H 1/00, F25B 30/02

(54) **HEAT-PUMP WATER HEATER AND AIR CONDITIONER**

(30) Priority: 17.04.2009 JP 2009100945
(71) Applicant: Mitsubishi Heavy Industries, Ltd., Tokyo 108-8215 (JP)
(72) Inventor: TAKEUCHI, Nobuyuki, Kiyosu-shi Aichi 452-8561 (JP); YAMADA, Hiroyuki, Kiyosu-shi Aichi 452-8561 (JP); OMURA, Minemasa, Nagoya-shi Aichi 453-8515 (JP)
(74) Representative: Henkel, Breuer & Partner
(86) International application number: PCT/JP2010/056751
(87) International publication number: WO 2010/119920

(57) **Abstract**

Provided is a heat-pump water heater and air conditioner having an expanded operable range when operating in heater mode. The heat-pump water heater and air conditioner has a water system that receives heat from a refrigerant system in the heat-pump, thereby producing hot water, and the refrigerant system is provided with an electronic expansion valve for cooling and an electronic expansion valve for heating in series. The heat-pump water heater and air conditioner is provided with ambient air temperature-responsive control which is activated when, during a heating cycle, the aperture of the electronic expansion valve for heating is set to a prescribed value or higher. The ambient air temperature responsive control comprises A-zone control, which is selected when the detected ambient air temperature (To) is equal to or greater than a prescribed comparison temperature (Tc), and B-zone control, which is selected when the detected ambient air temperature (To) is less than the prescribed comparison temperature (Tc). Through two levels of aperture control, A-zone control and B-zone control, the electronic expansion valve for cooling brings the actual degree of supercooling (Tsc) closer to a target degree of supercooling (Tsct).

## Description

### {Technical Field}

The present invention relates to a heat-pump water heating and air conditioning apparatus that performs water heating and air conditioning by using a heat pump, and particularly, to expansion-valve control executed when the heat pump is operated in a heating cycle.

### {Background Art}

Heat-pump water heating and air conditioning apparatuses include a refrigerant system in which a refrigerant sent out from a compressor circulates through a closed refrigerant circuit having a heat exchanger to repeat gas-liquid state changes and a water system in which water sent out from a pump absorbs heat from the refrigerant at the heat exchanger (water-refrigerant heat exchanger) provided in the refrigerant system to become hot water. In the heat-pump water heating and air conditioning apparatuses, a four-way valve provided in the refrigerant system is operated to switch the circulation direction of the refrigerant, thereby making it possible to select either a heating operation or a cooling operation.
When the above-described refrigerant system is put in the heating operation, water flowing in the water system is heated at the water-refrigerant heat exchanger serving as a condenser to become hot water. The hot water can be directly used as is or can be used as a heat source for hot-water heating with a radiator.

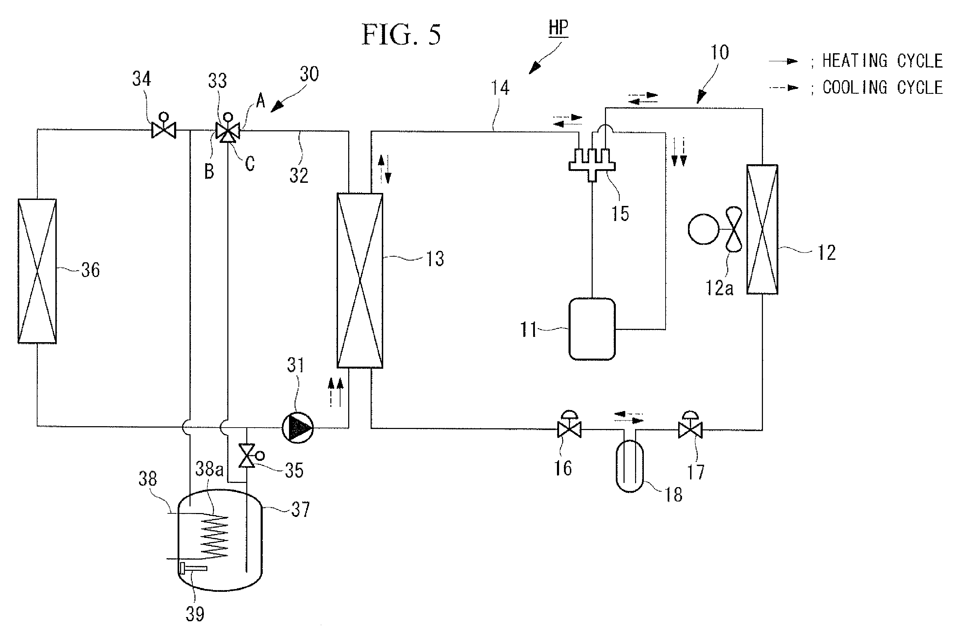

A refrigerator has been proposed that detects the degree of supercooling of a high-pressure liquid refrigerant and the degree of superheating of a low-pressure gas refrigerant during the operation and, based on the detected values, executes aperture control of a first expansion valve and a second expansion valve that are inserted in series. This refrigerator performs heat exchange between the refrigerant and air, and there is no description of a heat exchanger performing heat exchange between water and the refrigerant.
(For example, see Fig. 5 of PTL 1)

### {Citation List}

### {Patent Literature}

{PTL 1} Japanese Examined Utility Model Application, Publication No. Hei-2-39179

### {Summary of Invention}

### {Technical Problem}

In conventional heat-pump water heating and air conditioning apparatuses, a cooling electronic expansion valve and a heating electronic expansion valve are disposed in series with a receiver disposed therebetween. Specifically, according to the operational state, only one of the cooling electronic expansion valve and the heating electronic expansion valve is used for control, and the other is kept at a predetermined aperture.

Thus, in a heating operation state where water is heated at the water-refrigerant heat exchanger to become hot water, when heat-pump control is provided for a water heater, only the heating electronic expansion valve is used for the control. Therefore, for example, in a very-low outside-air temperature environment, the condensed liquid refrigerant is throttled insufficiently (not decompressed) only with the heating electronic expansion valve in some cases, thereby causing the operating range to be limited. Furthermore, depending on an operating condition for performing the heating operation, a liquid back-up phenomenon may occur when throttling of the condensed liquid refrigerant with the heating electronic expansion valve is insufficient, and therefore, there is a concern that the compressor may be damaged.
Note that a heat-pump water heating and air conditioning apparatus in which water is included in a tedium passing through the heat exchanger has an inherent problem that does not occur in ordinary air conditioners. Specifically, there is a concern that the heat exchanger may be damaged because the water freezes when the operation is stopped in a very-low-temperature environment.

Because of this background, heat-pump water heating and air conditioning apparatuses require operation control that can extend the operating range such that the heating operation can also be performed particularly in very-low temperature conditions.
The present invention has been made in view of the above-described circumstances, and an object thereof is to provide a heat-pump water heating and air conditioning apparatus capable of extending the operational range during a heating operation.

### {Solution to Problem}

In order to solve the above-described problems, the present invention employs the following solutions.
According to an aspect, the present invention provides a heat-pump water heating and air conditioning apparatus including: a heat-pump refrigerant system in which a refrigerant sent out from a compressor circulates through a closed refrigerant circuit having a heat exchanger to repeat gas-liquid state changes, and a cooling cycle or a heating cycle can be selected by changing the circulation direction of the refrigerant circulating through the refrigerant circuit; and a water system that has a hot-water tank coupled, via a flow-path switch valve, to a hot-water circulation flow path in which water sent out from a pump absorbs heat from the refrigerant at a water heat exchanger provided in the refrigerant system to become hot water, and the hot water is made to circulate to be used as a hot-water heat source, a cooling electronic expansion valve and a heating electronic expansion valve being disposed in series in the refrigerant system, in which outside-air temperature responsive control is provided that is executed when the aperture of the heating electronic expansion valve is throttled to a predetermined value or more, during the heating cycle; and the outside-air temperature responsive control comprises A-zone control selected when a detected outside-air temperature value (To) is equal to or higher than a predetermined comparison temperature (Tc) and B-zone control selected when the detected outside-air temperature value (To) is lower than the predetermined comparison temperature (Tc), and the cooling electronic expansion valve executes two levels of aperture control through the A-zone control and the B-zone control to bring an actual degree of supercooling (Tsc) closer to a target degree of supercooling (Tsct).

According to this heat-pump water heating and air conditioning apparatus, the outside-air temperature responsive control is provided that is executed when the aperture of the heating electronic expansion valve is throttled to the predetermined value or more, during the heating cycle; the outside-air temperature responsive control includes A-zone control selected when the detected outside-air temperature value (To) is equal to or higher than the predetermined comparison temperature (Tc) and B-zone control selected when the detected outside-air temperature value (To) is lower than the predetermined comparison temperature (Tc); and the cooling electronic expansion valve executes two levels of aperture control through the A-zone control and the B-zone control to bring an actual degree of supercooling (Tsc) closer to a target degree of supercooling (Tsct). Therefore, it is possible to effectively use the cooling electronic expansion valve and the heating electronic expansion valve, which are disposed in series, according to the detected outside-air temperature value (To) and to extend the control range of decompressing (throttling) the condensed liquid refrigerant.
Specifically, in the above-described aspect, the cooling electronic expansion valve, which was kept at the maximum aperture and was not used for control in a conventional heating cycle, is also operated together with the heating electronic expansion valve, according to the detected outside-air temperature value (To); therefore, the two electronic expansion valves, disposed in series, are effectively used to execute two levels of decompression control through A-zone and B-zone, thereby making it possible to extend the decompression control range of the liquid refrigerant.

In the above-described aspect, it is preferable that, in the A-zone control, when an entrance-and-exit water temperature difference (ΔT) at the water heat exchanger is equal to or larger than a first judgment temperature (ta), the target degree of supercooling (Tsct) be set constant at a first target value (t1), and, when the entrance-and-exit water temperature difference (ΔT) at the water heat exchanger is smaller than the first judgment temperature (ta), the target degree of supercooling (Tsct) be set variable from 0 to the first target value (t1); and, in the B-zone control, when the entrance-and-exit water temperature difference (ΔT) at the water heat exchanger is equal to or larger than a second judgment temperature (tb), the target degree of supercooling (Tsct) be set constant at a second target value (t2), and, when the entrance-and-exit water temperature difference (ΔT) at the water heat exchanger is smaller than the second judgment temperature (tb), the target degree of supercooling (Tsct) be set variable from 0 to the second target value (t2).

### {Advantageous Effects of Invention}

According to the above-described heat-pump water heating and air conditioning apparatus of the present invention, the cooling electronic expansion valve and the heating electronic expansion valve, which are disposed in series, are effectively used according to the detected outside-air temperature value (To) to extend the decompression control range of the condensed liquid refrigerant; therefore, it is possible to perform stable operation even in operating conditions at a very-low outside-air temperature, which were outside the operational range because the condensed liquid refrigerant was not sufficiently throttled, and to extend the operational range during the heating operation.
Furthermore, since a liquid back-up phenomenon caused by throttling of the condensed liquid refrigerant during the heating operation can be prevented or suppressed, it is possible to provide a highly-reliable highly-durable heat-pump water heating and air conditioning apparatus capable of resolving a concern of damage to the compressor.

### {Brief Description of Drawings}

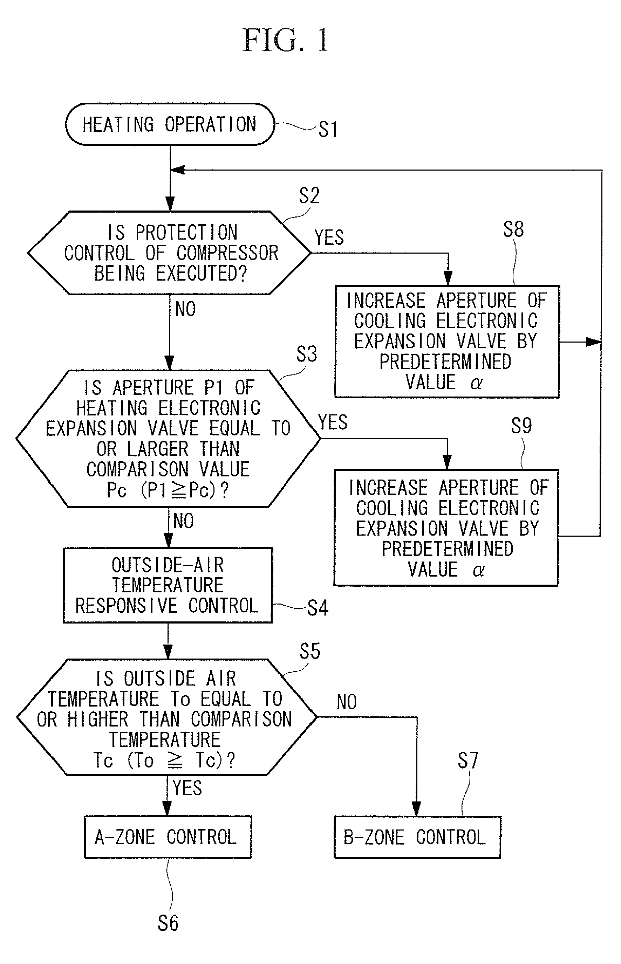

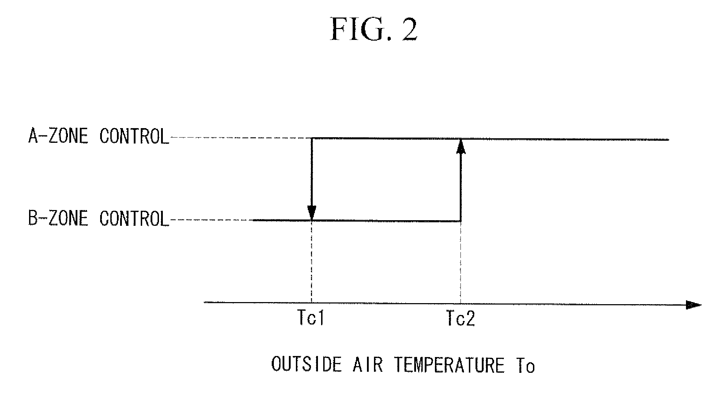

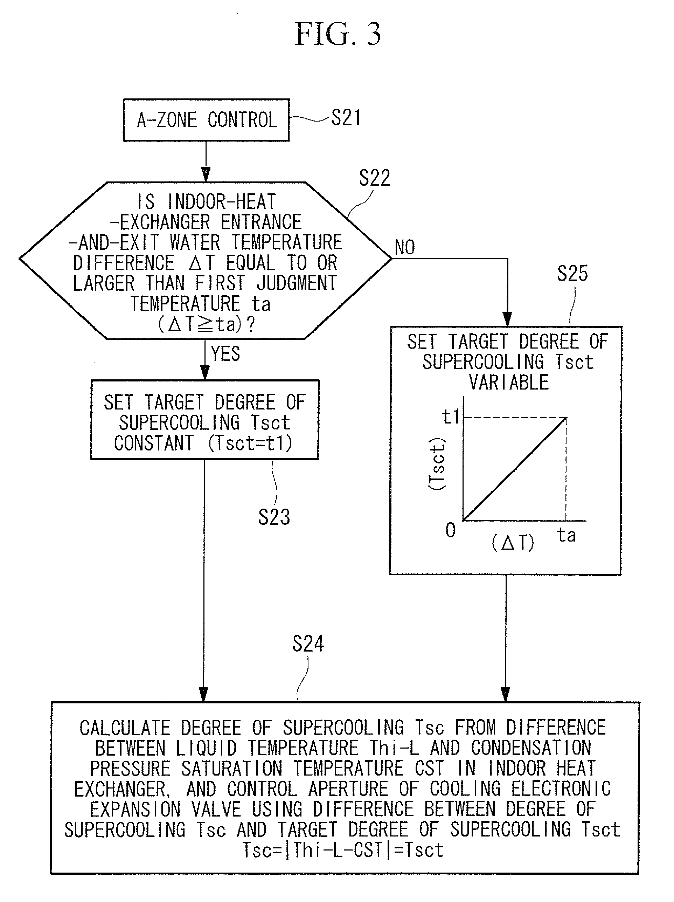

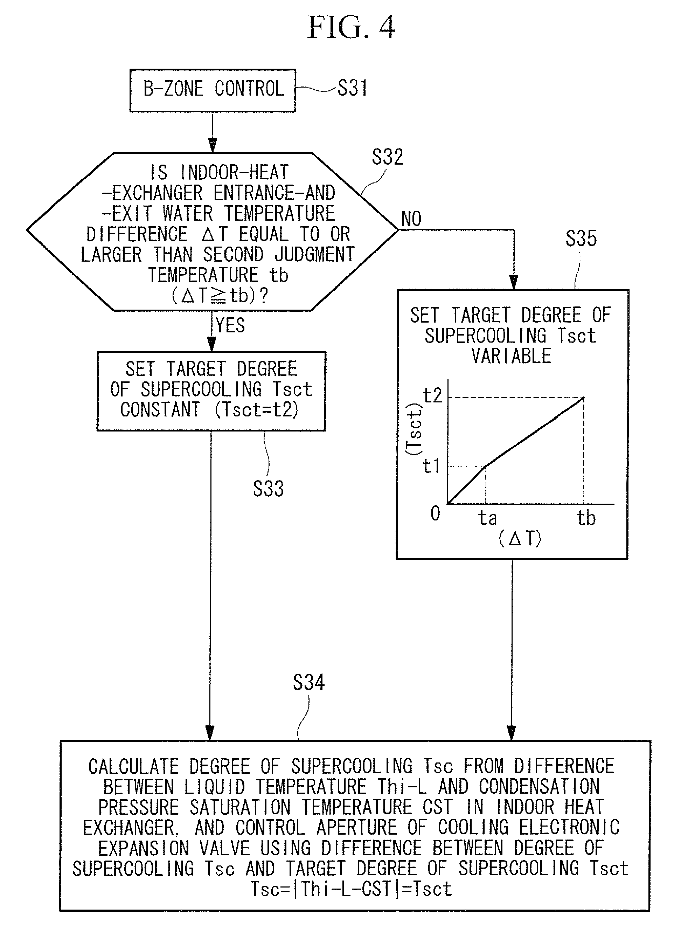

{Fig. 1} Fig. 1 is a flowchart showing a process of selecting A-zone control or B-zone control in a heat-pump water heating and air conditioning apparatus according to one embodiment of the present invention.
{Fig. 2} Fig. 2 is an explanatory diagram of hysteresis applied to a judgment comparison temperature (Tc) for an outside air temperature (To) shown in Fig. 1, at judgment comparison temperatures (Tc1 and Tc2).
{Fig. 3} Fig. 3 is a flowchart showing one example of A-zone control.
{Fig. 4} Fig. 4 is a flowchart showing one example of B-zone control.
{Fig. 5} Fig. 5 is a system diagram showing an example configuration of the heat-pump water heating and air conditioning apparatus according to the present invention.

### {Description of Embodiments}

A heat-pump water heating and air conditioning apparatus according to one embodiment of the present invention will be described below based on the drawings.
In a system diagram of the embodiment shown in Fig. 5, a heat-pump water heating and air conditioning apparatus HP includes a heat-pump refrigerant system 10 that can select a cooling cycle or a heating cycle by switching the circulation direction of a refrigerant circulating through a refrigerant circuit and a water system 30 that uses, for water heating and air heating, hot water obtained by heating water with a heat pump.

In the refrigerant system 10, a refrigerant sent out from a compressor 11 circulates through a closed refrigerant circuit 14 that includes an outdoor heat exchanger 12 and an indoor heat exchanger 13, to repeat gas-liquid state changes. The refrigerant circuit 14, shown in the figure, has a four-way valve 15 at the discharge side of the compressor 11. By operating the four-way valve 15, the circulation direction of the refrigerant can be switched to be reversed, thus selecting one of the clockwise cooling cycle and the counterclockwise heating cycle.
Further, a cooling electronic expansion valve 16 and a heating electronic expansion valve 17 are provided in series between the outdoor heat exchanger 12 and the indoor heat exchanger 13 in the refrigerant circuit 14, and a receiver 18 is provided between the electronic expansion valves 16 and 17.

In the water system 30, a hot-water circulation flow path 32 is formed in which water sent out from a pump 31 absorbs heat from the refrigerant at the indoor heat exchanger (hereinafter, also referred to as "water heat exchanger") 13, provided in the refrigerant system 10, to become hot water, and this hot water is circulated to be used as the hot water heat source. The hot water circulation flow path 32 is provided with a three-way valve 33, a first electromagnetic switch valve 34, and a second electromagnetic switch valve 35, as hot-water flow-path switch valves.
Furthermore, the above-described hot-water circulation flow path 32 is provided with a radiator 36 serving as a heat exchanger for heating with the hot water and a hot-water tank 37 that receives the hot water from the hot water circulation flow path 32 through a branch and stores the hot water to accumulate heat. In this case, the radiator 36 serves as the heat exchanger that performs heating by exchanging heat between the hot water and indoor air.

The hot water tank 37 includes a sanitary-water supply circuit 38 that supplies hot water heated by using the accumulated heat of the stored hot water and an electric heater 39 that is energized when needed.
The sanitary-water supply circuit 38 is a hot-water supply system in which water supplied from a hot-water supply pump (not shown) absorbs heat when flowing through a heat exchanger 38a in the hot water tank 37 to become hot water and is supplied.
The electric heater 39 is auxiliary heating means that is used when the amount of accumulated heat of hot water stored in the hot water tank 37 is as low as a predetermined value or less. Specifically, the electric heater 39 is a device that is energized when the hot water stored in the hot water tank 37 has a water temperature equal to or lower than a predetermined water temperature, so as to heat the stored hot water to raise its temperature to a desired temperature.

In the thus-configured water system 30, when the above-described three-way valve 33, first electromagnetic switch valve 34, and second electromagnetic switch valve 35 are appropriately opened/closed and selectively switched, one of a heating operation for supplying the hot water to the radiator 36 and a heat-accumulating operation for supplying the hot water to the hot water tank 37 can be selected and performed, or both of the heating operation and the heat-accumulating operation can be performed using the hot water by branching and supplying the hot water to both of the radiator 36 and the hot water tank 37.

In the above-described refrigerant system 10, when the heating cycle is selected, a low-temperature low-pressure gas refrigerant is compressed in the compressor 11 and sent out to the refrigerant circuit 14 as a high-temperature high-pressure gas refrigerant. This gas refrigerant is guided by the four-way valve 15 to the water heat exchanger 13, thereby circulating counterclockwise, as shown by solid arrows in the figure. In this case, the water heat exchanger 13 is a heat exchanger for heat exchange between the water sent out from the pump 31 in the water system 30 and the high-temperature high-pressure gas refrigerant and serves as a condenser in which condensation heat radiated through condensation of the refrigerant heats the water. As a result, the high-temperature high-pressure gas refrigerant flowing in the refrigerant system 10 is condensed, becoming a high-temperature high-pressure liquid refrigerant (including two gas and liquid phases), and the water flowing in the water system 30 absorbs heat from the refrigerant, becoming hot water.
The refrigerant condensed in the water heat exchanger 13 passes through the cooling electronic expansion valve 16 that is fully opened normally and flows into the receiver 18. At the receiver 18, gas-liquid separation of the refrigerant is performed, and the volume of the circulating refrigerant is adjusted.

At the downstream side of the receiver 18, the heating electronic expansion valve 17 is disposed to reduce the pressure of the high-temperature high-pressure liquid refrigerant. When the refrigerant passes through the heating electronic expansion valve 17, the high-temperature high-pressure liquid refrigerant is reduced in pressure to become a low-temperature low-pressure liquid refrigerant. This liquid refrigerant is guided to the outdoor heat exchanger 12 that serves as an evaporator, and exchanges heat with outside air to absorb heat from the outside air to evaporate. Since moisture in the air freezes to form frost on the peripheral surface of the outdoor heat exchanger 12 having a low temperature at this time, it is necessary to perform a defrosting operation at appropriate operation-time intervals to remove the formed frost.

In this way, when the low-temperature low-pressure liquid refrigerant passes through the outdoor heat exchanger 12, this liquid refrigerant evaporates to become a low-temperature low-pressure gas refrigerant. As a result, this gas refrigerant passes through the four-way valve 15 again and is sucked into the compressor 11. The low-temperature low-pressure gas refrigerant sucked into the compressor 11 is again compressed in the compressor 11 to become a high-temperature high-pressure gas refrigerant, and thereafter, the refrigerant circulates through the same route to repeat the gas-liquid state changes.
Note that, in the figure, reference numeral 12a denotes an outside-air fan for adjusting the volume of outside air (blast volume) passing through the outdoor heat exchanger 12.

On the other hand, in the above-described refrigerant system 10, when the cooling cycle is selected in order to perform the defrosting operation, the circulation direction of the refrigerant is switched by operating the four-way valve 15.
Specifically, the high-temperature high-pressure gas refrigerant sent out from the compressor 11 is guided by the four-way valve 15 to the outdoor heat exchanger 12, thereby circulating clockwise, as shown by dashed arrows in the figure. In this case, the outdoor heat exchanger 12 serves as a condenser in which heat is exchanged between outside air and the high-temperature high-pressure gas refrigerant, thereby condensing the refrigerant and radiating condensation heat. As a result, the high-temperature high-pressure gas refrigerant is condensed to become a high-temperature high-pressure liquid refrigerant (including two gas and liquid phases), and frost formed on the outdoor heat exchanger 12 is melted upon reception of heat radiation (condensation heat).
The refrigerant condensed in the outdoor heat exchanger 12 passes through the heating electronic expansion valve 17 that is fully opened and flows into the receiver 18. At the receiver 18, gas-liquid separation of the refrigerant is performed, and the volume of the circulating refrigerant is adjusted.

At the downstream side of the receiver 18, the cooling electronic expansion valve 16 is disposed to reduce the pressure of the high-temperature high-pressure liquid refrigerant. When the refrigerant passes through the cooling electronic expansion valve 16, the high-temperature high-pressure liquid refrigerant is reduced in pressure to become a low-temperature low-pressure liquid refrigerant. This liquid refrigerant is guided to the water heat exchanger 13 that serves as an evaporator and thus, exchanges heat with the hot water supplied from the water system 30 to absorb heat to evaporate. As a result, the low-temperature low-pressure liquid refrigerant becomes a low-temperature low-pressure gas refrigerant, and the gas refrigerant passes through the four-way valve 15 again and is sucked into the compressor 11. The low-temperature low-pressure gas refrigerant sucked into the compressor 11 is compressed in the compressor 11 to become a high-temperature high-pressure gas refrigerant, and thereafter, the refrigerant circulates through the same route to repeat the gas-liquid state changes.

In the above-described heat-pump water heating and air conditioning apparatus HP, outside-air temperature responsive control is provided that is executed when, during the heating cycle, the aperture of the heating electronic expansion valve 17 is throttled to a predetermined value or more. The outside-air temperature responsive control includes A-zone control that is selected when a detected outside-air temperature value (To) is equal to or higher than a predetermined comparison temperature (Tc) and B-zone control that is selected when the detected outside-air temperature value (To) is lower than the predetermined comparison temperature (Tc). In the outside-air temperature responsive control, the cooling electronic expansion valve 16 executes two levels of aperture control through the A-zone control and the B-zone control to bring an actual degree of supercooling (Tsc) closer to a target degree of supercooling (Tsct).

The outside-air temperature responsive control performed in the above-described heat-pump water heating and air conditioning apparatus HP will be specifically described below with reference to Fig. 1 to Fig. 4.
First, a process of selection between the A-zone control and the B-zone control will be described with reference to a flowchart of Fig. 1.
When the heating operation is selected in Step S1, the operation of the above-described heating cycle is started. Then, the flow advances to the next Step S2, and it is determined whether protection control of the compressor 11 is being executed.

When it is determined that the protection control is not being executed ("NO"), the flow advances to the next Step S3, and the aperture of the heating electronic expansion valve 17 is determined. Since the aperture of the heating electronic expansion valve 17 is usually controlled by a stepping motor, the pulse count in an aperture command is confirmed here to determine the current aperture P1.
Conversely, when it is determined that the protection control is being executed ("YES"), the flow advances to the next Step S8, and the aperture of the cooling electronic expansion valve 16 is opened to be increased by a predetermined value α. Then, the flow returns to Step S2 again, and the same control is repeated until the protection control is stopped. Specifically, in an operational state where the protection control of the compressor 11 is being executed, the aperture of the cooling electronic expansion valve 16 is unconditionally increased stepwise so as to increase the refrigerant circulation volume, thereby ensuring the refrigerant volume supplied to the compressor 11. Note that, in this case, because the aperture of the cooling electronic expansion valve 16 is also controlled by a stepping motor, the pulse count in an aperture command is changed to increase the aperture by the predetermined value α.

In Step S3, to determine the aperture of the heating electronic expansion valve 17, it is determined whether the current aperture P1 is equal to or larger than a predetermined comparison value Pc (P1 ≥ Pc). Specifically, in Step S3, it is determined whether an operation (control) of further throttling (the aperture P1 of) the heating electronic expansion valve 17 can be performed. In other words, in Step S3, it is determined whether sole control of further throttling the aperture P1 of the heating electronic expansion valve 17 can be executed. Therefore, the above-described predetermined comparison value Pc indicates the aperture (pulse count) obtained when the heating electronic expansion valve 17 is completely closed or when the heating electronic expansion valve 17 is almost completely closed.

When it is determined that the current aperture P1 is equal to or larger than the predetermined comparison value Pc ("YES"), the flow advances to the next Step S9, and the aperture of the cooling electronic expansion valve 16 is increased by the predetermined value α. Thereafter, the flow returns to Step S2 again, and the same control is repeated until the current aperture P1 becomes smaller than the predetermined comparison value Pc. Specifically, in an operational state where the current aperture P1 is equal to or larger than the predetermined comparison value Pc, the aperture control is executed by the cooling electronic expansion valve 16 until the aperture of the heating electronic expansion valve 17 is throttled to a predetermined P1

Conversely, when the result of Step S3 is "NO", it means that sole control of the heating electronic expansion valve 17 cannot be executed, specifically, it means that the heating electronic expansion valve 17 cannot be throttled any more. Thus, the flow advances to the next Step S4, and the outside-air temperature responsive control is executed.
In this outside-air temperature responsive control, an outside air temperature To is determined in Step S5. Specifically, it is determined whether the detected outside air temperature To is equal to or higher than a predetermined comparison temperature Tc (To ≥ Tc). When it is determined that the outside air temperature To is equal to or higher than the comparison temperature Tc ("YES"), the A-zone control is selected. When it is determined that the outside air temperature To is lower than the comparison temperature Tc ("NO"), the B-zone control is selected. For example, as shown in Fig. 2, when hysteresis is applied to the outside air temperature To used in this case at a comparison temperature Tc1 at which the A-zone control is changed to the B-zone control and a comparison temperature Tc2 at which the B-zone control is changed to the A-zone control, the selected zone control can be prevented from being frequently switched in a short time. Note that the comparison temperatures Tc1 and Tc2 are set with an appropriate temperature difference therebetween; specifically, Tc1 is set to 15 degrees, and Tc2 is set to 18 degrees, for example.

Next, the A-zone control, selected in the above-described Step S6, will be specifically described based on a flowchart of Fig. 3.
First, when the A-zone control is started in Step S21, in the next Step S22, an entrance-and-exit water temperature difference ΔT at the indoor heat exchanger 13 is calculated, and it is determined whether the entrance-and-exit water temperature difference ΔT is equal to or larger than a first judgment temperature ta (ΔT ≥ Ta). In this case, the entrance-and-exit water temperature difference ΔT corresponds to a water-temperature increase value occurring when water flowing in the water system 30 passes through the indoor heat exchanger 13, and the temperature difference between an entrance water temperature that is measured before heating and an exit water temperature that is measured after heating is used. Note that, here, the first judgment temperature ta can be set to 5 degrees, for example.

When it is determined in Step S22 that the entrance-and-exit water temperature difference ΔT is equal to or larger than the first judgment temperature ta ("YES"), the flow advances to the next Step S23, and the target degree of supercooling Tsct is set constant at a first target value t1 (for example, 5 degrees).
Then, the flow advances to the next Step S24, and the degree of supercooling Tsc is calculated from the difference (absolute value) between a liquid temperature Thi-L and a condensation pressure saturation temperature CST in the indoor heat exchanger 13. The aperture of the cooling electronic expansion valve 16 is controlled using the difference between the degree of supercooling Tsc calculated in this way and the above-described target degree of supercooling Tsct. Specifically, the aperture of the cooling electronic expansion valve 16 is adjusted so as to bring the calculated current degree of supercooling Tsc closer to the target degree of supercooling Tsct; in other words, it is adjusted such that the target degree of supercooling Tsct and the actual degree of supercooling Tsc are matched.

In this case, the liquid temperature Thi-L is the temperature of the liquid refrigerant, detected when the refrigerant flowing in the refrigerant system 10 passes through the indoor heat exchanger 13 and is condensed through heat radiation. Note that a temperature sensor (not shown) for detecting the liquid temperature Thi-L is disposed in the vicinity of the exit of the indoor heat exchanger 13 in the refrigerant circuit 14 operating in the heating cycle.
Furthermore, the condensation pressure saturation temperature CST is a pressure saturation temperature obtained according to the refrigerant pressure detected by a pressure sensor (not shown) disposed in the refrigerant circuit 14 between the indoor heat exchanger 13 and the cooling electronic expansion valve 16.

Conversely, when it is determined in Step S22 that the entrance-and-exit water temperature difference ΔT is smaller than the first judgment temperature ta ("NO"), the flow advances to the next Step S25, and the target degree of supercooling Tsct is set variable according to the entrance-and-exit water temperature difference ΔT. Specifically, in this case, the target degree of supercooling Tsct is set to a value that is variable from 0 to the first target value t1 in proportion to the entrance-and-exit water temperature difference ΔT.
After the variable target degree of supercooling Tsct is set in this way, the flow advances to the next Step S24, and aperture control for the cooling electronic expansion valve 16 is executed. In this case, the aperture control is the same as that executed when the flow advances from Step S23, except that the target degree of supercooling Tsct is variable.

Next, the B-zone control, selected in the above-described Step S7, will be specifically described based on a flowchart of Fig. 4.
First, when the B-zone control is started in Step S31, in the next Step S32, the entrance-and-exit water temperature difference ΔT at the indoor heat exchanger 13 is calculated, and it is determined whether the entrance-and-exit water temperature difference ΔT is equal to or larger than a second judgment temperature tb (ΔT ≥ Tb). In this case, the entrance-and-exit water temperature difference ΔT corresponds to a water-temperature increase value occurring when water flowing in the water system 30 passes through the indoor heat exchanger 13, and the temperature difference between the entrance water temperature, which is measured before heating, and the exit water temperature, which is measured after heating, is used. Note that the second judgment temperature tb used here is larger than the above-described first judgment temperature ta (tb > ta) and is set to 18 degrees, for example.

When it is determined in Step S32 that the entrance-and-exit water temperature difference ΔT is equal to or larger than the second judgment temperature tb ("YES"), the flow advances to the next Step S33, and the target degree of supercooling Tsct is set constant at a second target value t2 (for example, 14 degrees).
Then, the flow advances to the next Step S34, and the degree of supercooling Tsc is calculated from the difference (absolute value) between the liquid temperature Thi-L and the condensation pressure saturation temperature CST in the indoor heat exchanger 13. The aperture of the cooling electronic expansion valve 16 is controlled using the difference between the degree of supercooling Tsc calculated in this way and the above-described target degree of supercooling Tsct. Specifically, the aperture of the cooling electronic expansion valve 16 is adjusted so as to bring the calculated degree of supercooling Tsc closer to the target degree of supercooling Tsct; in other words, it is adjusted such that the target degree of supercooling Tsct and the actual degree of supercooling Tsc are matched. Note that Step S34 is the same as the above-described Step S24 for the A-zone control, except for the set target degree of supercooling Tsct.

Conversely, when it is determined in Step S32 that the entrance-and-exit water temperature difference ΔT is smaller than the second judgment temperature tb ("NO"), the flow advances to the next Step S35, the target degree of supercooling Tsct is set variable according to the entrance-and-exit water temperature difference ΔT. Specifically, in this case, the target degree of supercooling Tsct is set to a value that is variable from 0 to the second target value t2 according to the entrance-and-exit water temperature difference ΔT.
Specifically, when the entrance-and-exit water temperature difference ΔT falls within a region from 0 to the first judgment temperature ta, a value that is variable from 0 to the first target value t1 in proportion to the entrance-and-exit water temperature difference ΔT is set; and, when the entrance-and-exit water temperature difference ΔT falls within a region from the first judgment temperature ta to the second judgment temperature tb, a value that is variable from the first target value t1 to the second target value t2 in proportion to the entrance-and-exit water temperature difference ΔT with a different slope is set. Note that, when the entrance-and-exit water temperature difference ΔT falls within the region from the first judgment temperature ta to the second judgment temperature tb, the value of the target degree of supercooling Tsct that is variable according to the entrance-and-exit water temperature difference ΔT is small, and a slope of proportionality is gentle.

After the variable target degree of supercooling Tsct is set in this way, the flow advances to the next Step S34, and aperture control for the cooling electronic expansion valve 16 is executed. The aperture control executed in this case is the same as that executed when the flow advances from Step S33, except that the target degree of supercooling Tsct is variable.

As described above, the outside-air temperature responsive control has the A-zone control selected when the detected outside-air temperature value To is equal to or higher than the predetermined comparison temperature Tc and the B-zone control selected when the detected outside-air temperature value To is lower than the predetermined comparison temperature Tc. The cooling electronic expansion valve executes two levels of aperture control through the A-zone control and the B-zone control so as to bring the actual degree of supercooling Tsc closer to the target degree of supercooling Tsct. Thus, it is possible to effectively use the cooling electronic expansion valve 16 and the heating electronic expansion valve 17, which are disposed in series, according to the detected outside-air temperature value To and to extend the control range of decompressing (throttling) the liquid refrigerant condensed in the indoor heat exchanger 13.

Specifically, in the above-described outside-air temperature responsive control, the cooling electronic expansion valve 16, which was kept at the maximum aperture and was not used for control in a conventional heating cycle, is also operated together with the heating electronic expansion valve 17, according to the detected outside-air temperature value To; therefore, the two electronic expansion valves 16 and 17, disposed in series, are effectively used to execute two levels of decompression control through A-zone and B-zone, thereby making it possible to extend the decompression control range of the liquid refrigerant.
As a result, since the decompression control range of the condensed liquid refrigerant is extended, it is possible to perform a stable operation even in very-low outside-air temperature conditions, which were outside the operational range because the condensed liquid refrigerant was not sufficiently throttled through the sole control of the heating electronic expansion valve 17, and to extend the operational range during the heating operation.

Furthermore, although insufficient throttling of the condensed liquid refrigerant during the heating operation causes a liquid back-up phenomenon, since the extension of the operational range is also effective to prevent the liquid back-up phenomenon, it is possible to provide a highly-reliable highly-durable heat-pump water heating and air conditioning apparatus capable of preventing damage to the compressor.
Note that the present invention is not limited to the above-described embodiment, and modifications can be appropriately made without departing the scope thereof.

### {Reference Signs List}

- 10: refrigerant system
- 11: compressor
- 12: outdoor heat exchanger
- 12a: outdoor-device fan
- 13: indoor heat exchanger (water heat exchanger)
- 14: refrigerant circuit
- 15: four-way valve
- 16: cooling electronic expansion valve
- 17: heating electronic expansion valve
- 18: receiver
- 30: water system
- 31: pump
- 32: hot-water circulation flow path
- 33: three-way valve
- 34: first electromagnetic switch valve
- 35: second electromagnetic switch valve
- 36: radiator
- 37: hot-water tank
- 38: sanitary-water supply circuit
- 39: electric heater
- HP: heat-pump water heating and air conditioning apparatus

## Claims

1. A heat-pump water heating and air conditioning apparatus comprising: a heat-pump refrigerant system in which a refrigerant sent out from a compressor circulates through a closed refrigerant circuit having a heat exchanger to repeat gas-liquid state changes, and a cooling cycle or a heating cycle can be selected by changing the circulation direction of the refrigerant circulating through the refrigerant circuit; and a water system that has a hot-water tank coupled, via a flow-path switch valve, to a hot-water circulation flow path in which water sent out from a pump absorbs heat from the refrigerant at a water heat exchanger provided in the refrigerant system to become hot water, and the hot water is made to circulate to be used as a hot-water heat source, a cooling electronic expansion valve and a heating electronic expansion valve being disposed in series in the refrigerant system,
wherein outside-air temperature responsive control is provided that is executed when the aperture of the heating electronic expansion valve is throttled to a predetermined value or more, during the heating cycle; and
the outside-air temperature responsive control comprises A-zone control selected when a detected outside-air temperature value (To) is equal to or higher than a predetermined comparison temperature (Tc) and B-zone control selected when the detected outside-air temperature value (To) is lower than the predetermined comparison temperature (Tc), and the cooling electronic expansion valve executes two levels of aperture control through the A-zone control and the B-zone control to bring an actual degree of supercooling (Tsc) closer to a target degree of supercooling (Tsct).

2. A heat-pump water heating and air conditioning apparatus according to claim 1,
wherein, in the A-zone control, when an entrance-and-exit water temperature difference (ΔT) at the water heat exchanger is equal to or larger than a first judgment temperature (ta), the target degree of supercooling (Tsct) is set constant at a first target value (t1), and, when the entrance-and-exit water temperature difference (ΔT) at the water heat exchanger is smaller than the first judgment temperature (ta), the target degree of supercooling (Tsct) is set variable from 0 to the first target value (t1); and
in the B-zone control, when the entrance-and-exit water temperature difference (ΔT) at the water heat exchanger is equal to or larger than a second judgment temperature (tb), the target degree of supercooling (Tsct) is set constant at a second target value (t2), and, when the entrance-and-exit water temperature difference (ΔT) at the water heat exchanger is smaller than the second judgment temperature (tb), the target degree of supercooling (Tsct) is set variable from 0 to the second target value (t2).
